(19) Europäisches Patentamt
European Patent Office
Office européen des brevets

(11) Veröffentlichungsnummer: **0 633 112 A2**

# (12) EUROPÄISCHE PATENTANMELDUNG

(21) Anmeldenummer: **94110336.8**

(51) Int. Cl.[6]: **B29C 39/16**, //B29K33:04

(22) Anmeldetag: **04.07.94**

(30) Priorität: **10.07.93 DE 4323100**

(43) Veröffentlichungstag der Anmeldung:
**11.01.95 Patentblatt 95/02**

(84) Benannte Vertragsstaaten:
**AT BE CH DE DK ES FR GB IT LI NL SE**

(71) Anmelder: **RÖHM GMBH**
**Kirschenallee**
**D-64293 Darmstadt (DE)**

(72) Erfinder: **Endres, Bernhard, Dr.**
**Martin-Buber-Strasse 73a**
**D-64267 Darmstadt (DE)**
Erfinder: **Müller, Michael, Dr.**
**Pater-Delp-Strasse 32**
**D-64625 Bensheim (DE)**

## (54) Verfahren zur kontinuierlichen Herstellung von Platten aus Polymethacrylat-Giessharzen.

(57) Die Erfindung betrifft ein kontinuierliches Verfahren zur Herstellung von Platten aus gehärteten Polymethacrylat-Gießharzen A), gegebenenfalls enthaltend anorganische Füllstoffe B) durch Polymerisation der Gießharze auf heiz- und kühlbaren metallischen Transportbändern, mit den Merkmalen, daß die Transportbänder mit einem Kunststoff, ausgewählt aus der Gruppe der Polyelefine, halogenierten Polyolefine, Polyester oder Polyamide, beschichtet sind, sowie daß die Geschwindigkeit der Transportbänder $v_S$ mit dem Temperaturunterschied $\Delta T$ zwischen der Temperatur in der Mitte der Gußplatte und der Temperatur T des Kühlmittels jeweils am Ende der Kühlstrecke s miteinander verknüpft sind.

Fig. 1:

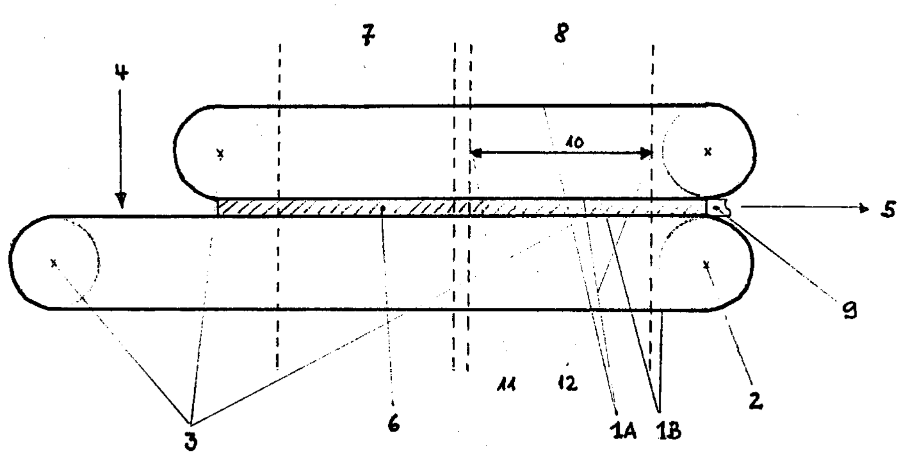


EP 0 633 112 A2

## Gebiet der Erfindung

Die Erfindung betrifft ein Verfahren zur kontinuierlichen Herstellung von Platten aus gehärteten Polymethacrylat-Gießharzen, die gegebenenfalls Füllstoffe enthalten, wobei die Gießharze zur Polymerisation auf heiz- und kühlbare Transportbänder aufgebracht werden, wobei die Geschwindigkeit der Transportbänder über den Temperaturunterschied zwischen der Temperatur in der Mitte der Gußplatte und der Temperatur des Kühlmittels jeweils am Ende der Abkühlstrecke und über die Wärmeübergangskoeffizienten des Transportbandes und der Gußplatte gesteuert wird. Die Transportbänder können mit einem Kunststoff, ausgewählt aus der Gruppe Polyolefine, halogenierte Polyolefine, Polyester oder Polyamide beschichtet sein.

## Stand der Technik

Verfahren zur kontinuierlichen Herstellung von Platten aus Polymethacrylat-Gießharzen sind bekannt. Meistens wird hierbei die Polymerisation der Gießharze zwischen zwei kontinuierlich laufenden Stahlbändern im sogenannten "Doppelbandverfahren" durchgeführt.
DE-AS 28 01 221 (= US-Patent 4 221 742) beschreibt ein kontinuierliches Gießverfahren, bei dem die flüssige polymerisierbare Masse, die durch Auflösen eines bestimmten Polymerisationsinitiators in einem Methylmethacrylatsirup mit einem Polymergehalt von 15 bis 35 Gew.-% hergestellt worden ist, kontinuierlich in den Raum eingespeist wird, der von einem Paar unteren bzw. oberen sich bewegenden Metallbändern, sowie kontinuierlichen Dichtungen zwischen den Bändern umschlossen wird. Die Polymerisation erfolgt in einer Heißwasserzone, wobei die Bänder anschließend durch eine Wärmebehandlungszone zur Vervollständigung der Polymerisation bei 110 bis 150 Grad C geführt werden.
In FR-A 2 214 216 werden Gußplatten aus Polymethylmethacrylat (PMMA) beansprucht, die in einem kontinuierlichen Verfahren hergestellt werden, wobei eine Monomer-Polymer-Mischung zwischen kontinuierlich laufende Bänder eingespeist wird, die eine Reihe von Heiz- und Kühlzonen passieren. Es resultieren PMMA-Gußplatten mit einer Wärmeformbeständigkeit (Heat deflection temperature HDT-A) von 96 Grad C, einem Restmonomerengehalt von etwa 1,4 % und einer Dickentoleranz von etwa ± 10 %.
Die kontinuierliche Herstellung von laminierten PMMA-Gußplatten wird in Jpn. Kokai Tokkyo Koho 79 126 263 (Chem. Abstr. 92, 130 154 p; = US-Patente 4 254 074, 4 302 257, 4 302 497) beschrieben, wobei eine Monomer-Polymer-Mischung, bestehend aus Methylmethacrylat und Polymethylmethacrylat, zwischen kontinuierlich laufende Bänder eingespeist wird, die mit Folien aus (Meth)acrylat-Copolymerisaten belegt sind, welche mit dem gehärteten PMMA-Gießharz verträglich sind. Es resultieren PMMA-Gußplatten mit einem guten Oberflächenglanz.
Jpn. Kokai Tokkyo Koho 80 93 102 (Chem. Abstr. 93, 240 792y) umfaßt die Herstellung von lichtstreuenden PMMA-Gußplatten zwischen kontinuierlich laufenden Bändern, die etwa 50 Teile anorganischen Füllstoff enthalten und die mit Folien aus einem Methylmethacrylat-Butylacrylat-Copolymerisat beschichtet werden. Die transluzenten Gußplatten eignen sich beispielsweise als Mattscheiben für die Rückwärts-Projektion.

DE-AS 20 32 646 (= US-Patent 3 775 364 umfaßt ein Verfahren zur Herstellung von gehärteten Methylmethacrylat-Gießharzen in Anwesenheit eines Lösungsmittels für den Polymerisationsinitiator mit verringerten Härtezeiten. Gemäß Beispiel 25 der DE-AS 20 32 646 wird ein füllstoffhaltiges Gießharz auf ein kontinuierlich fortschreitendes Stahlband - beschichtet mit einem losen glatten Überzug von 38 µm aus nicht weichgestelltem Polyvinylalkohol als Trennschicht - aufgegossen und gehärtet. Auf die Schicht des polymerisierenden Gießharzes wird dann eine Folie aus weichgestelltem Polyvinylalkohol aufgezogen.

In EP-A 64 396 (= US-Patent 4 592 887) wird ein Herstellungsverfahren für Formteile aus härtbaren Gießharzen beschrieben, bei dem die metallischen Gießformen mit einem Copolymerisat aus Olefin und Vinylalkohol beschichtet sind und mehrfach ohne Schichtabtrag benutzt werden können. Beispielsweise wird die Herstellung von Gußteilen aus gehärteten PMMA-Gießharzen beschrieben, die anorganische Füllstoffe wie Aluminiumhydroxid oder Siliciumdioxid enthalten.

DE-OS 17 79 807 (= US-Patente 3 716 431, 3 905 858) beschreibt Verfahren und Vorrichtung zur kontinuierlichen Herstellung von gestreiften Materialbahnen und -platten, wobei eine polymerisierende Flüssigkeit oder Paste zwischen sich bewegende Oberflächen gegossen wird, die in Bewegungsrichtung im wesentlichen parallel zueinander verlaufen. Gemäß den Ansprüchen 6 und 7 der DE-OS 17 79 807 können die als Unterlage oder Träger dienende untere Bahn und die obere Deckbahn jeweils ein Cellulosefilm oder ein Polyvinylfluoridfilm sein. Die Gießharze basieren auf härtbaren Polyesteredukten, die Methylmethacrylat als Comonomeres sowie gegebenenfalls Füllstoffe enthalten können.

Aufgabe und Lösung

Bei Platten aus Polymethacrylat-Gießharzen, die gegebenenfalls anorganische Füllstoffe enthalten, ist eine Mindestdicke von 2 mm erforderlich, beispielsweise aus baustatischen Gründen, da die im Bauwesen verwendeten Platten, die im allgemeinen Flächen von mehr als 1 Quadratmeter aufweisen, sonst beim Transport oder bei der Montage unter ihrem Eigengewicht brechen. Aus produktionstechnischen Gründen sind kontinuierliche Produktionsverfahren mit kurzen Aushärtezeiten für die Gießharze von hohem Interesse. Dabei darf keine oder nur minimale Haftung der polymerisierenden Gießharze an den Transportbändern auftreten.

Die im Stand der Technik beschriebenen kontinuierlichen Verfahren zur Herstellung von Platten aus gehärteten Polymethacrylat-Gießharzen verwenden zum größten Teil unbeschichtete Transportbänder aus Metall, wie beispielsweise die schon zitierten DE-AS 28 01 221 oder FR-A 2 214 216. Wendet man solche Verfahren auf Polymethacrylat-Gießharze mit anorganischen Füllstoffen an, so wird die Verwendung von Formtrennmitteln notwendig, um die Haftung zwischen den Metall-Transportbändern und den härtenden Gießharzen zu verhindern.

Deshalb ist man dazu übergegangen, zwischen Transportband und Gießharz Folien einzuführen, die mit den Gießharzen verträglich (vgl. Jpn. Kokai Tokkyo Koho 79 126 263 und 80 93 102) oder mit den Gießharzen unverträglich sind (vgl. DE-AS 20 32 646). Die mit dem Gießharz verträglichen Folien bilden feste Verbunde mit den gehärteten Gießharzen, wobei an der Nahtstelle allerdings optische Unregelmäßigkeiten auftreten können. Die mit dem Gießharz unverträglichen Folien werden nach der Polymerisation von den gehärteten Gießharz-Platten abgezogen und gegebenenfalls einer Wiederverwendung zugeführt. Beide Verfahrensweisen bedingen einen hohen technischen Aufwand durch präzise arbeitende Folieneinzugsvorrichtungen, Bereitstellung geeigneter Folien, sowie - im Falle der unverträglichen Folien - durch das notwendige Entfernen und die Wiederverwendung der Folien.

Die in EP-A 64 396 beschriebenen beschichteten Gießformen für die Härtung von gefüllten Gießharzen sind von den Beschichtungen auf aufwendig hergestellte Copolymerisate aus Olefinen und Vinylalkohol in bestimmten Zusammensetzungen beschränkt, die einem speziellen Konditionierungsverfahren unterworfen werden müssen. Es wird erwähnt, daß Beschichtungen aus fluorkohlenwasserstoffhaltigen Polymeren für das dort beschriebene Verfahren aufgrund zu hoher Haftung am gehärteten Gießharz nicht geeignet sind.

Das in DE-OS 17 79 807 beschriebene Verfahren ist zur Polymerisation von gehärteten Gießharz-Platten größerer Dicke nicht geeignet, da die Ableitung der Polymerisationswärme durch die dort beschriebenen Kunststoff-Trägerbahnen zu gering ist (beispielhaft werden dort Platten von nur 1,6 mm Dicke polymerisiert). Bei dickeren Platten würde dieses Verfahren zu lokalen Überhitzungen im polymerisierenden Gießharz und damit zur unerwünschten Bildung von Gasinklusionen durch verdampfende Monomere in den härtenden Gießharz-Platten führen.

Überraschenderweise wurde nun gefunden, daß das im folgenden beschriebene kontinuierliche Verfahren zur Herstellung von Platten aus gehärteten PolymethacrylatGießharzen A) gegebenenfalls enthaltend anorganische Füllstoffe B) durch Polymerisation der Gießharze auf beschichteten heiz- und kühlbaren metallischen Transportbändern die vorgegebene Aufgabe hervorragend löst.

Es ist dadurch gekennzeichnet, daß die Geschwindigkeit der Transportbänder über die sehr einfach zu bestimmenden Parameter Temperaturunterschied $\Delta T$ zwischen der Temperatur in der Mitte der Gußplatte und der Temperatur T des Kühlmittels jeweils am Ende der Abkühlstrecke s auf dem Transportband, sowie den Wärmeübergangskoeffizienten des Transportbands gesteuert wird. Damit können in Abhängigkeit der Dicke der herzustellenden Gußplatten auf einfache Weise und in sehr kurzer Zeit optimale Geschwindigkeiten der Transportbänder ohne empirischen Aufwand eingestellt werden.

In einer bevorzugten Ausführungsform der Erfindung wird folgender Steueralgorithmus verwendet, der die Geschwindigkeit des Transportbandes $v_S$ mit dem Temperaturunterschied $\Delta T$ zwischen der Temperatur in der Mitte der Gußplatte und der Temperatur T des Kühlmittels jeweils am Ende der Kühlstrecke s sowie mit den Wärmeleitfähigkeiten des Transportbands $\lambda_S$, der Transportbandbeschichtung $\lambda_B$ sowie der Gußplatte $\lambda_{Pl}$ verknüpft.

$$v_S = \frac{\Delta T}{-\frac{dT}{ds}\left[\frac{d_S}{2\lambda_S}\rho_S c_S d_S + \left(\frac{d_S}{\lambda_S} + \frac{d_B}{2\cdot\lambda_B}\right)\rho_B c_B d_B + \left(\frac{d_S}{\lambda_S} + \frac{d_B}{\lambda_B} + \frac{K}{2\lambda_{Pl}}\right)\rho_{Pl} c_{Pl}\cdot K\right]}$$

wobei:

$\frac{dT}{ds}$ für den Temperaturgradienten längs der Kühlstrecke s,
$d_S$ für die Dicke des Transportbands,
$\rho_S$ für die Dichte des Transportbands
$c_S$ für die spezifische Wärmekapazität des Transportbands
$d_B$ für die Dicke der Beschichtung des Transportbands,
$\rho_B$ für die Dichte der Beschichtung des Transportbands
$c_B$ für die spezifische Wärmekapazität der Beschichtung des Transportbands,
K für die Hälfte der Dicke der Gußplatte,
$\rho_{Pl}$ für die Dichte der Gußplatte, sowie
$C_{Pl}$ für die spezifische Wärmekapazität der Gußplatte

stehen.

In besonders bevorzugten Ausführungsformen der Erfindung ist die Beschichtung der Transportbänder ausgewählt aus der Gruppe der Polyolefine, halogenierten Polyolefine, Polyester oder Polyamide. Ferner enthalten die verwendeten Polymethacrylat-Gießharze A) bevorzugt zwischen 40 und 80 Gew.-% anorganische Füllstoffe B). Desweiteren enthalten die Polymethacrylat-Gießharze A) im ungehärteten Zustand bevorzugt Präpolymerisate PM in Anteilen zwischen 0,1 und 20 Gew.-%.

In ganz besonders bevorzugten Ausführungsformen der Erfindung sind die monomeren Verbindungen M des ungehärteten Polymethacrylat-Gießharzes A) ausgewählt aus der Gruppe der Alkyl(meth)acrylate, Cycloalkyl(meth)acrylate oder Aryl(meth)acrylate. In einer weiteren ganz bevorzugten Ausführungsform der Erfindung weist die Kunststoffschicht auf den metallischen Transportbändern eine strukturierte Oberfläche auf, deren Struktur auf die Oberfläche der gehärteten Gußplatten abgebildet wird.

Durchführung der Erfindung

Der polymerisierbare organische Bestandteil des Polymethacrylat-Gießharzes A)

Als polymerisierbare Bestandteile der Gießharz-Zusammensetzung A) werden Derivate M der Acryl- und der Methacrylsäure eingesetzt, die vorzugsweise ein oder mehrere Präpolymerisate PM enthalten und die vorzugsweise radikalisch unter Bildung eines bei Raumtemperatur festen Polymerisats polymerisiert werden können. Die flüssigen Polymervorstufen weisen im allgemeinen eine Viskosität von weniger als 5 Pa•s, vorzugsweise von weniger als 0,5 Pa•s bei der zur Formgebung vorgesehenen Temperatur auf.

Bevorzugt eingesetzt werden Monomere M der Formel I:

$$CH_2 = \overset{\overset{\displaystyle R_1}{|}}{C} - \overset{\overset{\displaystyle O}{\|}}{C} - O - R_2 \qquad (I),$$

worin

$R_1$ für Wasserstoff oder Methyl sowie

$R_2$ für einen gegebenenfalls verzweigten und gegebenenfalls substituierten Alkylrest mit 1 bis 18 Kohlenstoffatomen, oder für einen gegebenenfalls substituierten Cycloalkylrest mit 5 bis 12 Ringkohlenstoffatomen, oder für einen gegebenenfalls substituierten Arylrest mit 6 bis 10 Ringkohlenstoffatomen

stehen.

Die an sich bekannten Substituenten sind beispielsweise Halogen-, Hydroxy-, Alkoxygruppen sowie Dialkylaminogruppen mit C1- bis C12-Alkylresten, vorzugsweise mit C1-bis C6-Alkylresten.

Insbesondere seien als Monomere M Verbindungen der Formel I genannt, worin $R_2$ für Estersubstituenten mit 1 bis 8 Kohlenstoffatomen sowie $R_1$ für Methyl steht, wie beispielsweise Ethylmethacrylat, Propylmethacrylat, n-Butylmethacrylat sowie dessen Isomere wie z.B. Isopropylmethacrylat, tert.-Butylmethacrylat, 2-Ethylhexylmethacrylat, Cyclohexylmethacrylat, Phenylmethacrylat, Benzylmethacrylat sowie besonders bevorzugt Methylmethacrylat.

Ferner können die Polymervorstufen noch an sich bekannte vernetzende Monomere VM enthalten, deren Gehalt im allgemeinen bei 0,01 bis 10 Gew.-%, vorzugsweise bei 0,1 bis 5 Gew.-% bezogen auf die flüssigen Polymervorstufen liegt. Solche vernetzenden Monomere VM sind beispielsweise Verbindungen mit mindestens zwei polymerisationsfähigen Vinylgruppen im Molekül (vgl. hierzu z.B. H. Rauch-Puntigam, Th. Völker, "Acryl- und Methacrylverbindungen", Seite 184, Springer Verlag, Heidelberg 1967),wobei exemplarisch Ethylenglykoldimethacrylat, 1,4-Butandioldimethacrylat, Triglykoldimethacrylat, Trimethylolpropyltrimethacrylat sowie Allylverbindungen, wie Allylmethacrylat oder Triallylcyanurat, genannt seien.
Im allgemeinen enthalten die Polymervorstufen einen Gehalt von über 50 Gew.-%, speziell von 80 bis 100 Gew.-% an (Meth)acrylsäureestern gemäß Formel I und an vernetzenden Monomeren VM. Weiterhin können als Comonomere mit den (Meth)acrylsäureestern gemäß Formel I copolymerisierbare Monomere verwendet werden, wie beispielsweise Vinylaromaten, wie Styrol, $\alpha$-Methylstyrol, ringsubstituierte Styrole oder Divinylbenzol, heterocyclische Vinylverbindungen wie Vinylpyrrolidon oder Vinylpyridin, Acrylnitril oder Methacrylnitril, Vinylester, wie Vinylacetat oder Vinylpropionat, sowie Vinylhalogenide, wie Vinylchlorid oder Vinylidenchlorid.
Besonders günstig ist ein Gemisch aus Methylmethacrylat als Monomerem der Formel I und einem vernetzenden Monomeren VM, wie beispielsweise Glykoldimethacrylat, wobei das Gewichtsverhältnis zwischen Methylmethacrylat und VM vorteilhaft zwischen 95 : 5 und 99,9 : 0,1 liegt.

Vorzugsweise enthält die flüssige, organische, polymerisierbare Vorstufe Präpolymerisate PM, die im allgemeinen aus denselben Monomeren M wie die polymerisierbare Vorstufe aufgebaut sind, wobei die Präpolymerisate PM jedoch keine funktionalisierten Monomere enthalten. Im allgemeinen gelten dieselben Proportionen wie die für die Monomeren M angegebenen. Vorzugsweise sind die Präpolymerisate PM in den Monomeren M gelöst, sie können aber auch darin dispergiert sein. In der Regel haben die Präpolymerisate PM mittlere Molekulargewichte $M_w$ im Bereich zwischen $2 \times 10^4$ und $4 \times 10^5$ Dalton (zur Bestimmung von $M_w$ durch Gelpermeationschromatographie vgl. beispielsweise H.F. Mark et al., Encyclopedia of Polymer Science and Technology, Vol. 10, Seiten 1 bis 19, J. Wiley, New York, 1987). Der Anteil der Präpolymerisate PM an den flüssigen Polymervorstufen liegt im Bereich zwischen 0,1 und 20 Gew.-%, vorzugsweise zwischen 1 und 10 Gew.-% bezogen auf den polymerisierbaren organischen Bestandteil des Gießharzes A). Beispielsweise kann das Präpolymerisat PM ein Copolymerisat aus Methylmethacrylat und Methylacrylat im Gewichtsverhältnis 9 : 1 mit einem mittleren Molekulargewicht Mw von etwa $2 \times 10^5$ Dalton sein.

Die anorganischen Füllstoffe B des Polymethacrylat-Gießharzes

Als Füllstoffe geeignet sind die einschlägig für Gießharze verwendeten organischen Materialien, wie beispielsweise Aluminiumoxide, Alkali- und/oder Erdalkalioxide, Siliciumdioxid und/oder Titandioxid in verschiedenen Modifikationen, Tone, Silikate, Oxide, Kohle, Metalle oder Metallegierungen, synthetische Materialien wie Keramik, Glasmehl, Prozellan, Schlacke oder feinverteiltes Siliciumdioxid, Quarze, Kaolin, Talkum, Glimmer, Feldspat, Apatit, Baryte, Gips, Kreide, Kalkstein, Dolomit oder Gemische der vor- und nachstehend genannten Komponenten.

Bevorzugt verwendet werden anorganische Füllstoffe B), die beim Erhitzen flammhemmende, in der Regel gasförmige Substanzen, wie beispielsweise Wasser oder Kohlendioxid, abspalten. Darunter fallen zum Beispiel anorganische Verbindungen mit Hydratwasser, Erdalkalihydroxide, Metallhydroxide, Hydrogencarbonate, Carbonate, Hypophosphate, Phosphate, Sulfide, Hyposulfide, Borsäurederivate und dergleichen. Besonders bevorzugt wird Aluminiumhydroxid und/oder Aluminiumoxid-Trihydrat verwendet. Zweckmäßig wird bei den anorganischen Füllstoffen eine mittlere Korngröße der Füllstoffteilchen von 100 $\mu$m (Durchmesser), vorzugsweise von 75 $\mu$m nicht überschritten. Füllstoffteilchen mit einer Korngröße < 0,1 $\mu$m sollen dabei nicht mehr als 10 % des Volumens aller Füllstoffteilchen ausmachen. In einer weiteren Ausführungsform der Erfindung besteht der Füllstoff aus einem Gemisch aus mindestens zwei Füllstoffteilchen-Fraktionen, deren mittlere Durchschnittskorngrößen solchermaßen beschaffen sind, daß ein Größenverhältnis zwischen den mittleren Durchschnittskorngrößen der großen Füllstoffteilchen und denjenigen der kleinen Füllstoffteilchen zwischen 10 : 1 und 2 : 1, bevorzugt zwischen 6 : 1 und 4 : 1 vorliegt. Das Gewichtsmengenverhältnis zwischen großen und kleinen Füllstoffteilchen liegt im allgemeinen zwischen 4 : 1 und 1 : 4, bevorzugt zwischen 2 : 1 und 1 : 2. Die Teilchengröße wird gemäß den üblichen Verfahren bestimmt, wobei zur Teilchengrößenbestimmung die jeweils größten Abmessungen der Füllstoffteilchen herangezogen werden (vgl. beispielsweise B. Scarlett, Filtration & Separation, Seite 215, 1965).

Bevorzugt ist der anorganische Füllstoff solchermaßen beschaffen, daß das ausgehärtete Gießharz einen elastischen Schermodul von wenigstens 5 $GNm^{-2}$, bevorzugt von wenigstens 10 $GNm^{-2}$ aufweist, wobei bei der Einstellung der mechanischen Eigenschaften die vorgesehene Anwendung der Gießharze im Auge zu behalten ist.
Der Füllstoffanteil an den Gießharzen beträgt im allgemeinen mindestens 40 Gew.-%, wobei in der Regel ein Anteil von 80 Gew.-% nicht überschritten wird. Als Richtwert seien Füllstoffanteile von 50 bis 80 Gew.-% angegeben. Die Herstellung der Füllstoffe in den zweckmäßigen Korngrößen kann nach den bekannten Verfahren erfolgen, beispielsweise durch Brechen und/oder Mahlen.

Die Herstellung der Gießharz-Suspensionen

Zweckmäßigerweise geht man bei der Herstellung der Gießharz-Suspensionen von der flüssigen, organischen Polymervorstufe A) aus, welche die Monomeren M sowie gegebenenfalls die Präpolymerisate PM enthält und welche die organische Phase des Gießharzes bildet.
In die organische Phase wird nun mit Hilfe mechanischer Dissolver der anorganische Füllstoff B) eingetragen, wobei gegebenenfalls die Füllstoffteilchen-Fraktionen einzeln zugegeben werden. Der Vorgang ist in der Regel nach 10 Minuten abgeschlossen. Danach wird die Suspension über einen Zeitraum von etwa 10 Minuten am Dissolver dispergiert, wobei die Umlaufgeschwindigkeit des Dissolvers etwa 10 bis 20 Meter pro Sekunde beträgt. Im allgemeinen werden die anorganischen Füllstoffe B) der organischen Phase A) solchermaßen zugegeben, daß die Viskosität der Gießharz-Suspension nicht über einen Wert von etwa 10 Pa s steigt.
Im Anschluß daran löst man die Polymerisationshilfsmittel wie an sich bekannte Polymerisationsinitiatoren, in Mengen von 0,1 bis 5 Gew.-% bezogen auf die Monomeren M in der Gießharz-Suspension. Als Polymerisationsinitiatoren werden im allgemeinen Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. z.B. J. H. Brandrup, E.H. Immergut, "Polymer-Handbook", 3rd. Ed., Kapitel III, Seiten 1 bis 65, J. Wiley, New York, 1989).
Beispielsweise können die Polymerisationsinitiatoren verwendet werden: Peroxide wie
tert.-Butylperoctoat, Dicyclohexylperoxid, Cumolhydroperoxid oder bevorzugt Halbperester der Permaleinsäure, wie beispielsweise tert.-Butylpermaleinat, in Verbindung mit alkalisch reagierenden Metallsalzen (vgl. auch DE-AS 20 32 646), sowie Azoverbindungen wie 2,2'-Azobis-(isobutyronitril) oder 4,4'-Azobis-(2,4-dimethylvaleronitril).Zweckmäßigerweise erfolgt der Zusatz der Polymerisationsinitiatoren erst kurz vor dem Aushärteprozeß der Gießharz-Suspensionen.
Den Gießharz-Suspensionen können zusätzlich zu den feinteiligen, anorganischen Füllstoffen B) noch Verstärkerstoffe, wie beispielsweise Faserstoffe, zugesetzt werden. Zu geeigneten Faserstoffen gehören beispielsweise Glasfasern, Mineralfasern oder Steinfasern. Der Anteil dieser Verstärkerstoffe liegt im allgemeinen unterhalb des Gehaltes an den anorganischen Füllstoffen B).

Um farbige Formteile herstellen zu können, kann man der organischen Phase A) auch Pigmente und/oder Farbstoffe zusetzen. Als Beispiele seien Eisenoxid, Titandioxid, Zinkweiß, Ultramarinblau oder Ruß genannt. Pigmente können auch als vorgebildete Dispersionen in die organische Phase A) mit Hilfe geeigneter Pigment-Dispergiermittel eingebracht werden.
Weiterhin kann die Gießharz-Suspension innere Trennmittel enthalten, die neben der Kunststoff-Beschichtung das Anhaften des gehärteten Gießharzes am Transportband verhindern und damit zusätzlich für eine gute Oberflächenbeschaffenheit der Gießharz-Formteile sorgen. Beispiele für innere Trennmittel sind Alkali- und Erdalkalisalze von Fettsäuren sowie Alkylphosphate und deren neutralisierte Derivate.

Härtung der Gießharze und Herstellung der Platten

Im allgemeinen bestehen die Transportbänder aus Metallbändern, insbesondere aus Stahlbändern, die mit einem Kunststoff, ausgewählt aus der Gruppe Polyolefine, halogenierte Polyolefine, Polyester oder Polyamide beschichtet sind. Bevorzugt werden Schichten aus Ethylenvinylacetat-Copolymerisaten oder Polyestern, ganz besonders bevorzugt Schichten aus Polytetrafluorethylen verwendet.

Die Schichtdicke der Metallbänder liegt im allgemeinen zwischen 0,1 und 5 mm, bevorzugt zwischen 0,5 und 2 mm. Die Dicke der Kunststoffschicht beträgt im allgemeinen zwischen 0,01 bis 5 mm, vorzugsweise 0,03 bis 2 mm. Der Auftrag der Kunststoffschicht kann beispielsweise durch Laminieren von Kunststoff-Folien oder bevorzugt durch Aufsintern von Kunststoffpulver auf die Oberfläche der Metallbänder erfolgen. Dabei muß gewährleistet sein, daß der Verbund zwischen Kunststoffschicht und Oberfläche der Metallbänder sehr eng und an keiner Stelle unterbrochen ist, um eine gute Wärmeleitung durch den Gesamtverbund Metallband mit Kunststoffschicht zu gewährleisten. Vorzugsweise ist die Kunststoffschicht an ihrer äußeren Oberfläche strukturiert, wobei die Struktur auf die Oberfläche der gehärteten Gießharz-Platten übertragen wird.

Die im erfindungsgemäßen Verfahren aufgewendete Vorrichtung ist ein Doppelbandförderer bekannter Bauart, wie er beispielsweise in DE-AS 28 01 221 beschrieben wird. In Fig. 1 ist der für diese Erfindung verwendete Doppelbandförderer beschrieben.
Dabei wird ein oberes (1A) und ein unteres (1B) endloses Metallband mit der gleichen Geschwindigkeit in dieselbe Richtung bewegt, wobei zwischen beiden Bändern (1A, 1B) auf jeder Seite der Bänder (1A, 1B) mindestens eine kontinuierliche Dichtung (6) angeordnet ist, die sich in engem Kontakt mit beiden Bändern

(1A, 1B) bewegt.

Zwischen den beiden Bändern (1A, 1B) bildet sich somit ein Raum, in den das Gießharz A) kontinuierlich über eine Dosiereinrichtung (4) eingespeist wird. Der Raum zwischen den beiden Bändern (1A, 1B) ist solchermaßen bemessen, daß das gefüllte Gießharz nach der Polymerisation eine Dicke von mindestens 2 mm, vorzugsweise von mindestens 5 mm aufweist. In einer bevorzugten Ausführungsform wird das untere Band (1B) über die Antriebswalze (2) bewegt, wobei das obere Band (1A) über die Friktion an dem eingefüllten Gießharz und den Dichtungen mitgenommen wird. Die Laufwalzen (3) ermöglichen das synchrone Laufen des oberen und unteren Bandes (1A, 1B). Die Polymerisation des Gießharzes A) erfolgt durch eine im allgemeinen mit Luft oder Wasser temperierte Polymerisationszone (7). Die Wärmebehandlungstemperatur kann über die gesamte Polymerisationszone konstant sein oder aber auch stufenweise oder kontinuierlich geändert werden.

An die Polymerisationszone (7) ist die Kühlzone (8) angeschlossen, um das plattenförmige Polymerisat (9) vor der Entnahme (5) auf weniger als 100 Grad C, vorzugsweise weniger als 80 Grad C abzukühlen. Die Abkühlung kann beispielsweise durch Besprühen der sich bewegenden Bänder (1A, 1B) mit kaltem Wasser, durch Anblasen der Bänder (1A, 1B) mit kalter Luft oder durch Angleichen der Bandtemperatur an die Raumtemperatur erfolgen.

Vorzugsweise fällt die Temperatur in der Kühlzone (8) linear ab, das heißt, der Temperaturgradient längs der Kühlstrecke s (10): dT/ds ist konstant. Besonders bevorzugt liegt dT/ds zwischen 10 und 100 $Km^{-1}$, ganz besonders bevorzugt liegt dT/ds zwischen 20 und 60 $Km^{-1}$. Die Länge der Kühlstrecke s beträgt vorzugsweise zwischen 1 und 5 m, besonders vorzugsweise zwischen 2 und 4 m.

Die Bandgeschwindigkeit $v_S$ wird in einer bevorzugten Ausführungsform der Erfindung über die Parameter Temperaturunterschied $\Delta T$ zwischen der Temperatur in der Mitte der Gußplatte (9) und der Temperatur des Kühlmittels jeweils am Ende (12) der Kühlstrecke s (10), dem Gradienten dT/ds der Kühlmitteltemperatur T längs der Kühlstrecke s (10), sowie über die Wärmeleitfähigkeiten des Transportbands $\lambda_S$, der Transportbandbeschichtung $\lambda_B$ und der Gußplatte $\lambda_{Pl}$ gesteuert.

Der bevorzugt eingesetzte Steueralgorithmus lautet:

$$v_S = \frac{\Delta T}{-\frac{dT}{ds}\left[\frac{d_S}{2\lambda_S}\rho_S c_S d_S + \left(\frac{d_S}{\lambda_S} + \frac{d_B}{2\cdot\lambda_B}\right)\rho_B c_B d_B + \left(\frac{d_S}{\lambda_S} + \frac{d_B}{\lambda_B} + \frac{K}{2\lambda_{Pl}}\right)\rho_{Pl} c_{Pl}\cdot K\right]}$$

wobei gilt:

dT/ds = bevorzugt linearer Temperaturgradient längs der Kühlstrecke s,
$d_S$ = Dicke des Transportbands,
$\rho_S$ = Dichte des Transportbands,
$c_S$ = spezifische Wärmekapazität des Transportbands,
$d_B$ = Dicke der Transportbandbeschichtung,
$\rho_B$ = Dichte der Transportbandbeschichtung,
$c_B$ = spezifische Wärmekapazität der Transportbandbeschichtung
2K = Dicke der Gußplatte
$\rho_{Pl}$ = Dichte der Gußplatte
$C_{Pl}$ = spezifische Wärmekapazität der Gußplatte.

Für die oben genannten Temperaturgradienten dT/ds längs der Kühlstrecke s, besonders bevorzugt zwischen 10 und 100 $Km^{-1}$, and verwendeten Kühlstreckenlängen s von 1 bis 5 m, resultieren bei Verwendung von Stahl als Transportbandmaterial und Transportbandbeschichtungen, wie sie vorzugsweise aus der Gruppe Polyolefine, halogenierte Polyolefine, Polyester oder Polyamide ausgewählt werden, typische Transportbandgeschwindigkeiten von 0,1 bis 1 m pro Minute.

Vorteilhafte Wirkungen der Erfindung

Mit dem erfindungsgemäßen Verfahren werden Platten aus Polymethacrylat-Gießharzen mit hoher Oberflächengüte erhalten, welche sich in einem hohen Oberflächenglanz bei glatten Oberflächen der Kunststoffschicht und einer genauen Abbildung der Oberflächenstruktur der Kunststoffoberfläche auf die Plattenoberflächen bei fein strukturierten Kunststoffoberflächen äußert.

Solche Platten werden vorteilhaft beispielsweise als Baumaterialien in Wand- oder Bodenverkleidungen, als

Möbelbestandteile, wie beispielsweise Tischplatten oder Waschtische, oder als Sanitärartikel eingesetzt, wobei die erfindungsgemäßen Polymethacrylat-Gießharzplatten gut umformbar sind, beispielsweise im Tiefziehverfahren oder mit weiteren gängigen Umformtechniken (vgl. beispielsweise Vieweg, Esser, Kunststoff-Handbuch, Band IX, Seiten 539 bis 580, Carl Hanser Verlag, München, 1975).
Aufgrund der speziellen Ausgestaltung der Transportbänder kann die kontinuierliche Polymerisation der Polymethacrylat-Gießharze in verhältnismäßig kurzen Zeiträumen durchgeführt werden, wobei der für die Heiz- und Kühlzonen wichtige Wärmeübergang exakt und ohne Zeitverzögerung steuerbar ist. Dadurch wird eine hohe Produktionsrate an Platten aus dem gefüllten Polymethacrylat-Gießharz gewährleistet. Besonders vorteilhaft ist die Möglichkeit, verhältnismäßig dicke Gießharz-Platten herstellen zu können, die höheren mechanischen Belastungen ausgesetzt werden können.

Die folgenden Beispiele sollen die Erfindung erläutern.

BEISPIELE

Beispiel 1

Herstellung der Gießharze in exemplarischer Form

Als Monomeres wird Methylmethacrylat in der üblichen Reinheit in Mengen von gewöhnlich 80 bis 100 Gew.-% bezogen auf die Gesamtheit angewendet. Als Comonomere kommen die gelegentlich für Polymethylmethacrylat (PMMA) angewendeten infrage, wie beispielsweise (Meth)acrylsäure, Methylacrylat, Butylacrylat oder Styrol.
Insbesondere empfiehlt sich die Verwendung von anpolymerisierten Monomeren (Präpolymerisat), das beispielsweise 5 Gew.-% Polymerisat enthalten kann. Solche Mischungen werden aufgrund ihrer relativ hohen Viskosität als Sirupe bezeichnet und sind bei dem angewendeten Doppelbandverfahren sehr gut handhabbar.

Die Polymerisationsansätze enthalten darüber hinaus noch Initiatoren, sowie häufig Vernetzer, gegebenenfalls Weichmacher, sowie Stabilisatoren (vgl. H. Rauch-Putigam, Th. Völker, Acryl- und Methacrylverbindungen, Seiten 274 bis 280; Springer-Verlag, Heidelberg, Berlin, 1967).

In besonders bevorzugten Ausführungsformen der Erfindung wird A) mit den schon beschriebenen anorganischen Füllstoffen B) dotiert, wobei zweckmäßigerweise die Füllstoff-Anteile zwischen 40 und 80 Gew.-% bezogen auf das Gießharz liegen.

Beispiel 2

Ermittlung der Bandgeschwindigkeit $v_S$ bei vorgegebenen Parametern nach vorgegebenem Algorithmus gemäß Anspruch 2

Parameterfeld:

a) Transportband aus Stahl
  aa) Dicke des Transportbands :
  $d_S = 10^{-3}$ m
  ab) Wärmeleitfähigkeit des Transportbands:
  $\lambda_S = 62{,}8\ Wm^{-1}K^{-1}$
  ac) Dichte des Transportbands:
  $\rho_S = 7{,}85 \times 10^3\ Kgm^{-3}$
  ad) spezifische Wärmekapazität des Transportbands:
  $c_S = 686\ J\ Kg^{-1}K^{-1}$
b) Beschichtung des Transportbands aus Polytetrafluorethylen
  ba) Dicke der Beschichtung:
  $d_B = 10^{-3}$ m
  bb) Wärmeleitfähigkeit der Beschichtung:
  $\lambda_B = 0{,}26\ Wm^{-1}K^{-1}$
  bc) Dichte der Beschichtung:
  $\rho_B = 2{,}15 \times 10^3\ Kgm^{-3}$
  bd) spezifische Wärmekapazität der Beschichtung
  $c_B = 1500\ J\ Kg^{-1}K^{-1}$

c) Gießharz: PMMA ohne Füllstoff

ca) Dicke der Gießharzplatte:
$2K = 6 \times 10^{-3}$ oder $12 \times 10^{-3}$ m

cb) Wärmeleitfähigkeit der Gießharzplatte:
$\lambda_{Pl} = 0{,}19\ Wm^{-1}K^{-1}$

cc) Dichte der Gießharzplatte:
$\rho_{Pl} = 1{,}19 \times 10^3\ Kgm^{-3}$

cd) spezifische Wärmekapazität der Gießharzplatte:
$c_{Pl} = 1470\ J\ Kg^{-1}K^{-1}$

Vorgaben:

$\Delta T = 30\ K$ = Temperaturunterschied zwischen Kühlmitteltemperatur $T = 293\ K$ und der Temperatur in der Mitte der Gußplatte (323 K) am Ende der Kühlstrecke s

$\frac{dT}{ds}$ : $-50\ Km^{-1}$ = linearer Gradient der Kühlmitteltemperatur T längs der Kühlstrecke s

$s = 2m$

Anfangstemperatur in der Mitte der Gußplatte: $T_a = 393\ K$

Folgende Bandgeschwindigkeiten $v_S$ resultieren nach dem erfindungsgemäßen Algorithmus mit o.g. Vorgaben.

I)

| | |
|---|---|
| $2K = 6 \times 10^{-3}$ m<br>$d_S = 10^{-3}$ m | $v_S = 1{,}44 . 10^{-2}\ ms^{-1}$ |

II)

| | |
|---|---|
| $2K = 6 \times 10^{-3}$ m<br>$d_S = 10^{-3}$ m<br>$d_B = 10^{-3}$ m | $v_S = 0{,}88 \times 10^{-2}\ ms^{-1}$ |

III)

| | |
|---|---|
| $2K = 12 \times 10^{-3}$ m<br>$d_S = 10^{-3}$ m<br>$d_B = 10^{-3}$ m | $v_S = 0{,}28 \times 10^{-2}\ ms^{-1}$ |

In Fig. 2 sind die Temperaturverläufe für die Temperatur in der Plattenmitte (1) und für die Kühlmitteltemperatur T (2) graphisch dargestellt. Die oben dargestellten Fälle I, II und III fallen allesamt unter die Kurve (1).

**Patentansprüche**

**1.** Verfahren zur kontinuierlichen Herstellung von Gußplatten aus gehärteten Polymethacrylat-Gießharzen A) durch Polymerisation der Gießharze A) auf heiz- oder kühlbaren metallischen Transportbändern,
dadurch gekennzeichnet,
daß die Geschwindigkeit der Transportbänder $v_S$ über den Temperaturunterschied $\Delta T$ zwischen der Temperatur in der Mitte der Gußplatte und der Temperatur T des Kühlmittels jeweils am Ende der Kühlstrecke s und über den Wärmeübergangskoeffizienten des Transportbandes gesteuert wird.

**2.** Verfahren zur kontinuierlichen Herstellung von Gußplatten gemäß Anspruch 1, dadurch gekennzeichnet, daß die Geschwindigkeit des Transportbandes $V_S$ mit dem Temperaturunterschied $\Delta T$ zwischen der Temperatur in der Mitte der Gußplatte und der Temperatur T des Kühlmittels jeweils am Ende der Kühlstrecke s und mit den Wärmeleitfähigkeiten des Transportbands $\lambda_S$, der Transportbandbeschichtung $\lambda_B$ sowie der Gußplatte $\lambda_{Pl}$ über folgenden Algorithmus verbunden ist:

$$v_S = \frac{\Delta T}{-\frac{dT}{ds}\left[\frac{d_S}{2\lambda_S}\rho_S c_S d_S + \left(\frac{d_S}{\lambda_S} + \frac{d_B}{2\cdot\lambda_B}\right)\rho_B c_B d_B + \left(\frac{d_S}{\lambda_S} + \frac{d_B}{\lambda_B} + \frac{K}{2\lambda_{Pl}}\right)\rho_{Pl} c_{Pl}\cdot K\right]}$$

wobei:

dT/ds für den Gradienten der Kühlmitteltemperatur T längs der Kühlstrecke s

$d_S$ für die Dicke des Transportbands,

$\rho_S$ für die Dichte des Transportbands,

$c_S$ für die spezifische Wärmekapazität des Transportbands

$d_B$ für die Dicke der Beschichtung des Transportbands,

$\rho_B$ für die Dichte der Beschichtung des Transportbands,

$c_B$ für die spezifische Wärmekapazität der Beschichtung des Transportbands,

2K für die Dicke der Gußplatte

$\rho_{Pl}$ für die Dichte der Gußplatte, sowie

$c_{Pl}$ für die spezifische Wärmekapazität der Gußplatte

stehen.

3. Verfahren zur kontinuierlichen Herstellung von Gußplatten gemäß den Ansprüchen 1 und 2, dadurch gekennzeichnet, daß die metallischen Transportbänder mit einem Kunststoff beschichtet sind, der aus der Gruppe Polyolefine, halogenierte Polyolefine, Polyester oder Polyamide ausgewählt ist.

4. Verfahren zur kontinuierlichen Herstellung von Gußplatten gemäß den Ansprüchen 1 bis 3, dadurch gekennzeichnet, daß die Polymethacrylat-Gießharze A) anorganische Füllstoffe B) enthalten.

5. Verfahren zur kontinuierlichen Herstellung von Gußplatten gemäß Anspruch 4, dadurch gekennzeichnet, daß der Anteil der anorganischen Füllstoffe B) an der Mischung aus A) und B) zwischen 40 und 80 Gew.-% beträgt.

6. Verfahren zur kontinuierlichen Herstellung von Gußplatten gemäß den Ansprüchen 1 bis 5, dadurch gekennzeichnet, daß die monomeren Verbindungen M des ungehärteten Polymethacrylat-Gießharzes A) der Formel I entsprechen:

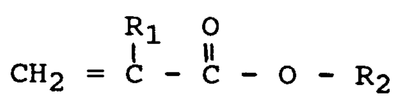

(I),

worin

$R_1$ für Wasserstoff oder Methyl, sowie

$R_2$ für einen gegebenenfalls verzweigten und gegebenenfalls substituierten Alkylrest mit 1 bis 18 Kohlenstoffatomen, oder für einen gegebenenfalls substituierten Cycloalkylrest mit 5 bis 12 Ringkohlenstoffatomen, oder für einen gegebenenfalls substituierten Arylrest mit 6 bis 10 Ringkohlenstoffatomen stehen.

7. Verfahren zur kontinuierlichen Herstellung von Gußplatten gemäß den Ansprüchen 1 bis 6, dadurch gekennzeichnet, daß das ungehärtete Polymethacrylat-Gießharz A) Präpolymerisate PM in Anteilen von 0,1 bis 20 Gew.-% bezogen auf den polymerisierbaren organischen Bestandteil des Gießharzes enthält.

8. Verfahren zur kontinuierlichen Herstellung von Gußplatten gemäß den Ansprüchen 1 bis 7, dadurch gekennzeichnet, daß die Kunststoffschicht auf den metallischen Transportbändern eine strukturierte Oberfläche aufweist.

9. Verfahren zur kontinuierlichen Herstellung von Gußplatten gemäß Anspruch 8, dadurch gekennzeichnet, daß die Struktur der Oberfläche der Kunststoffschicht auf die Oberfläche der gehärteten Gußplatten

abgebildet wird.

**10.** Verfahren zur kontinuierlichen Herstellung von Gußplatten gemäß den Ansprüchen 1 bis 9, dadurch gekennzeichnet, daß die Dicke der Kunststoffschicht auf den metallischen Transportbändern zwischen 0,1 und 2 mm beträgt.

**11.** Verfahren zur kontinuierlichen Herstellung von Gußplatten gemäß den Ansprüchen 1 bis 10, dadurch gekennzeichnet, daß der anorganische Füllstoff B) ein Gemisch aus zwei Füllstoffteilchenfraktionen ist, deren mittlere Durchschnittskorngröße solchermaßen beschaffen sind, daß das Größenverhältnis zwischen den mittleren Durchschnittsgrößen der großen Füllstoffteilchen und denjenigen der kleinen Füllstoffteilchen zwischen 4 : 1 und 1 : 4 liegt.

Fig. 1:

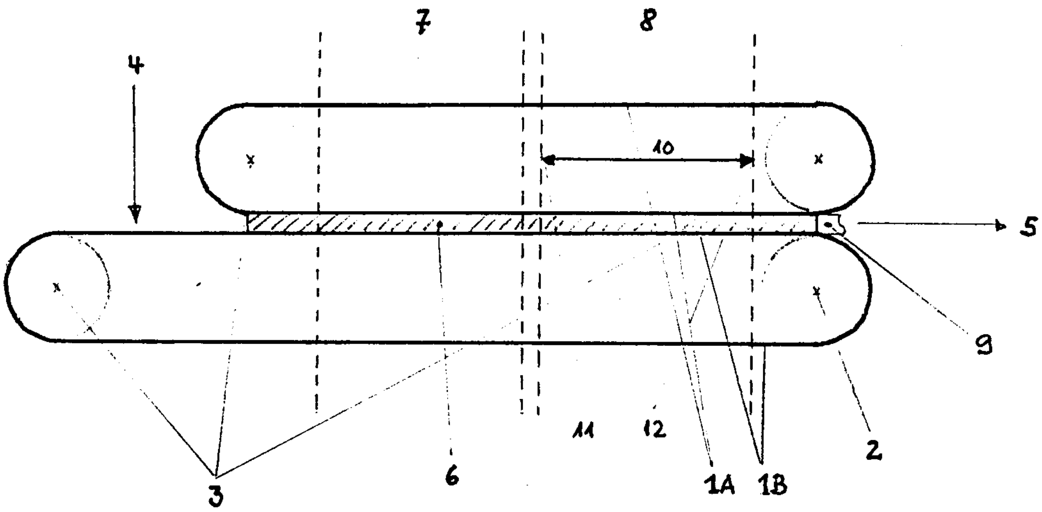

Fig. 2:

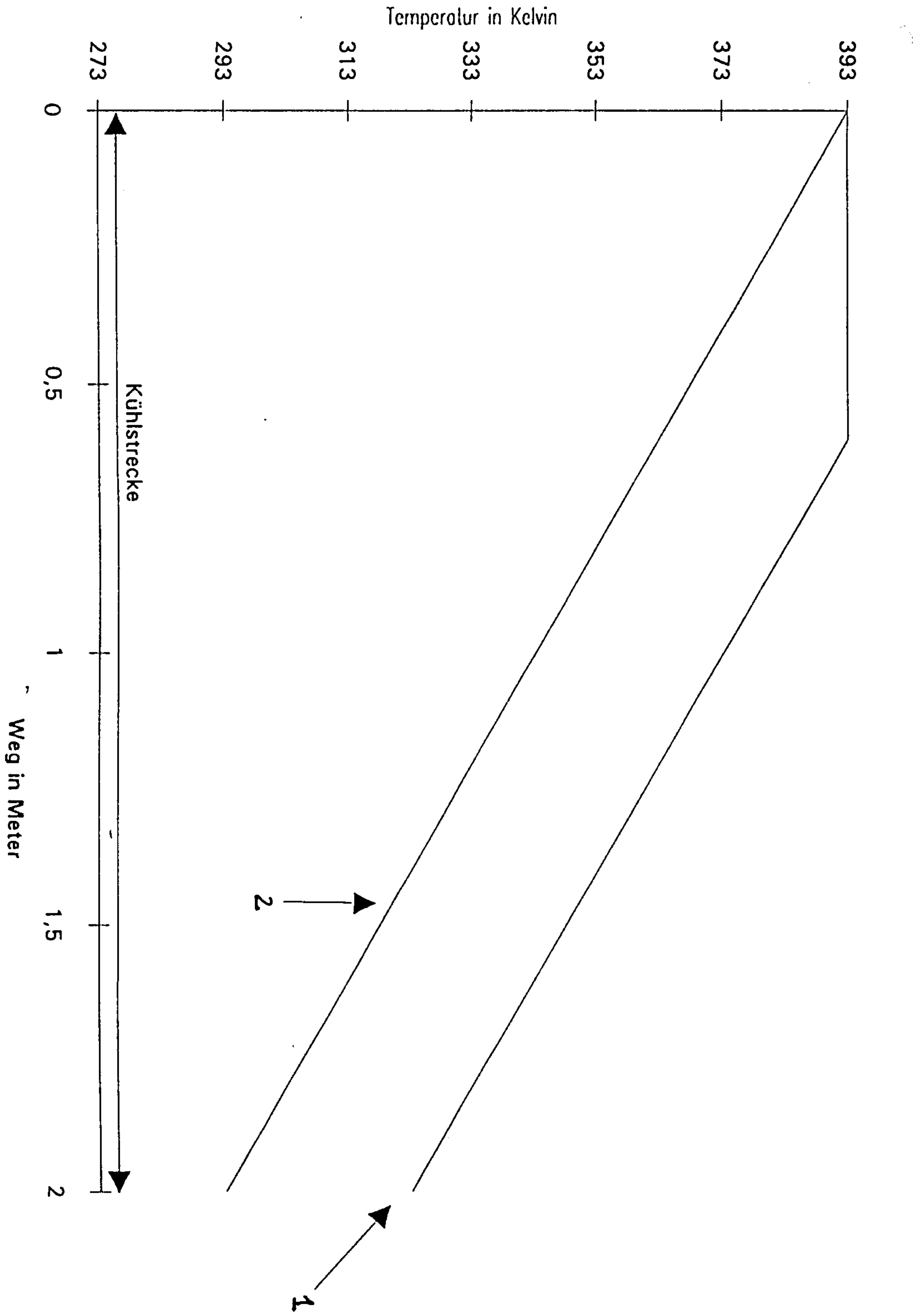
Temperatur in Kelvin
273
293
313
333
353
373
393
0
0,5
1
1,5
2
Kühlstrecke
Weg in Meter
2
1